(19) Europäisches Patentamt
European Patent Office
Office européen des brevets

(11) Numéro de publication : **0 102 299**
**B1**

(12) **FASCICULE DE BREVET EUROPÉEN**

(45) Date de publication du fascicule du brevet : **27.05.87**

(51) Int. Cl.[4] : **C 22 B 3/00**, C 22 B 19/02

(21) Numéro de dépôt : **83401702.2**

(22) Date de dépôt : **24.08.83**

(54) **Procédé pour la dissolution sélective du plomb.**

(30) Priorité : **24.08.82 FR 8214561**

(43) Date de publication de la demande :
**07.03.84 Bulletin 84/10**

(45) Mention de la délivrance du brevet :
**27.05.87 Bulletin 87/22**

(84) Etats contractants désignés :
**AT BE CH DE FR GB IT LI LU NL SE**

(56) Documents cités :
**FR-A- 2 271 298**
**FR-A- 2 346 456**
**FR-A- 2 359 211**
**FR-A- 2 387 293**
**US-A- 4 337 128**
**Le dossier contient des informations techniques présentées postérieurement au dépôt de la demande et ne figurant pas dans le présent fascicule.**

(73) Titulaire : **SOCIETE MINIERE ET METALLURGIQUE DE PENARROYA Société anonyme dite:**
**Tour Maine-Montparnasse 33, avenue du Maine**
**F-75755 Paris Cédex 15 (FR)**

(72) Inventeur : **Beutier, Didier**
**48 boulevard Edgar Quinet**
**F-75014 Paris (FR)**

(74) Mandataire : **Ricalens, François**
**Chef du Service de la Propriété Industrielle du Groupe IMETAL 1, avenue Albert Einstein**
**F-78191 Trappes Cedex (FR)**

**EP 0 102 299 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention a pour objet un procédé pour dissoudre sélectivement le plomb vis-à-vis du zinc présent dans un composé sulfuré.

Elle concerne plus particulièrement une technique permettant de faire des concentrés de zinc ne comportant que peu de plomb à partir de concentrés de plomb-zinc.

Au cours de ces dernières décennies, les minerais classiques de blende et de galène se sont épuisés et les nouveaux gisements découverts sont essentiellement des gisements micro-cristallisés de minerais mixtes, minerais dont les constituants sont difficiles à séparer par les techniques conventionnelles de la flottation différentielle.

L'industrie minière se trouve confrontée à une alternative dont le premier terme est de réaliser une flottation différentielle coûteuse en produit et en énergie car ces flottations nécessitent un broyage extrêmement fin de l'ordre de 10 micromètres et ne permettent d'atteindre que de faibles rendements parfois inférieurs à 50 % et dont le deuxième terme est l'obtention de concentrés mixtes plomb-zinc, concentrés dont la valeur marchande est faible car ces concontrés mixtes ne peuvent pas être traités dans toutes les usines de zinc, ce qui implique des pénalités commerciales considérables.

C'est pourquoi un des buts de la présente invention est de fournir un procédé qui soit susceptible de produire un concentré dont le composant essentiel est le zinc, sous forme de sulfure, avec comme impuretés du soufre élémentaire à partir d'un concentré plomb-zinc mixte.

Antérieurement à la présente invention, on avait déjà proposé, notamment dans la demande de brevet français déposée par la demanderesse et publiée sous le numéro 2 359 211, de dissoudre sélectivement le plomb à l'aide de chlorure cuivrique.

Quelqu'intérêt qu'ait cette technique, elle présentait et présente le grave inconvénient de polluer le concentré de zinc ainsi obtenu de quantités appréciables de cuivre. Ceci a un double désavantage, d'une part ces pertes du cuivre qui est coûteux, d'autre part, on produit un concentré de zinc qui est pénalisé commercialement par la forte proportion de cuivre présent en tant qu'impureté.

Quelques légères variantes de ce système ont été proposées postérieurement à cette demande dans les brevets US déposés par les Sociétés Duisburger Kupferhütte (n° 4 260 588) et Hazen Research (n° 4 276 084). Cependant, toutes ces variantes présentent le même inconvénient que décrit précédemment.

C'est pourquoi un des buts de la présente invention est de fournir un procédé qui permette de produire un concentré de zinc sans polluer ce dernier avec du cuivre.

Un autre but de la présente invention est de fournir un procédé qui permette de produire une solution de chlorure de plomb peu polluée en zinc à partir d'un concentré sulfuré plomb-zinc.

Ces buts sont atteints au moyen d'un procédé pour la dissolution sélective du plomb vis-à-vis du zinc ou vis-à-vis du cuivre et du zinc présents dans un composé sulfuré dans lequel on soumet ledit composé à une lixiviation, caractérisé par le fait que ladite lixiviation est réalisée au moyen d'une solution contenant du chlorure ferreux avec barbotage d'un gaz contenant de l'oxygène, par le fait que le pH de la solution de chlorure ferreux est maintenu à une valeur supérieure à 1,5 et par le fait que la température est fixée à une valeur comprise entre environ 60 et 100 °C.

Pour obtenir un bon résultat un compromis doit être trouvé au plan de la température. En effet, les expériences menées au cours de la recherche qui a conduit à la présente demande de brevet ont démontré que pour augmenter une sélectivité de la dissolution du plomb vis-à-vis du zinc, il est préférable de réaliser la lixiviation à une température aussi faible que possible. En revanche, pour que la goethite formée au cours de la réaction exprimée par l'équation suivante (1) :

$$2\ FeCl_2 + 3/2\ O_2 + 2\ PbS + H_2O = 2\ S^o + 2\ \underline{Fe(O)OH} + 2\ PbCl_2$$

soit bien filtrable, la température doit être supérieure à 60 °C. C'est pourquoi il est préférable de choisir une température comprise entre environ 60 °C et 100 °C pour obtenir une bonne précipitation de la goethite et une bonne sélectivité vis-à-vis du zinc.

Pour obtenir une bonne sélectivité vis-à-vis du zinc, il est nécessaire que le pH soit supérieur à 1,5, avantageusement supérieur à 2, et de préférence supérieur à 2,5.

Il convient de signaler ici toutefois que plus le pH est élevé plus lente est la dissolution du plomb. Le pH peut être régulé en jouant d'une part sur le débit de l'oxygène présent dans le gaz contenant l'oxygène et d'autre part sur l'addition d'acide chlorhydrique. Toutefois, l'addition d'acide chlorhydrique, si elle existe doit être très lente pour éviter une redissolution parasite importante de la goethite, ce qui se traduirait par un dégagement éventuellement brutal de quantités relativement élevées de fer ferrique, ce qui nuirait à la sélectivité de la lixiviation. Il va de soi qu'en cas de pH trop acide, la régulation peut être effectuée par addition d'une base par exemple oxyde de plomb ou hydroxyde alcalin, alcalino-terreux et/ou d'ammonium. Toutefois, cette dernière addition doit être évitée dans la mesure du possible.

Un autre moyen d'augmenter la sélectivité de ladite lixiviation est de choisir une granulométrie relativement grossière du minerai, par exemple, une granulométrie caractérisée par le fait que le $d_{80}$ du produit à lixivier est supérieur à 50 micromètres, avantageusement supérieur à 100 micromètres et de

préférence à 200 micromètres pour la mise en œuvre du procédé.

Un $d_{80}$ de 50 micromètres est défini comme la distribution de dimension de particules telles que 80 % des particules passent au travers d'un tamis de 50 micromètres.

Un autre moyen d'améliorer la sélectivité de ladite lixiviation est de choisir une concentration relativement élevée en fer ferreux qui devra être avantageusement supérieure ou égale à 10 g/l, de préférence entre 50 et 100 g/l (1 chiffre significatif). La vitesse de lixiviation croît également avec la concentration en fer ferreux.

Un moyen supplémentaire d'accroître la vitesse de lixiviation est d'augmenter la pression partielle d'oxygène par exemple en utilisant de l'oxygène pur ou bien même de réaliser la lixiviation à une pression d'oxygène supérieure à la pression atmosphérique. Il doit être indiqué à ce stade de la description que la sélectivité de la lixiviation vis-à-vis du zinc est un phénomène uniquement cinétique puisque des calculs thermodynamiques montrent que le zinc devrait être lixivié en premier. Ainsi, dans la mesure où les conditions requises pour la sélectivité sont remplies, il est préférable de choisir les autres conditions de manière à augmenter la vitesse de la lixiviation.

Un autre moyen d'accroître la vitesse de la lixiviation est d'ajouter un catalyseur accélérant la vitesse d'oxydation de l'ion ferreux. Le meilleur catalyseur connu est à ce jour le cuivre présent soit sous forme cuivreuse soit sous forme cuivrique. Mais d'une part le cuivre existe à peine en solution lorsque la galène est présente dans la pulpe au potentiel redox (entre environ 600 et 250 mV par rapport à l'électrode d'hydrogène, généralement entre 500 et 300 mV) fixé par les conditions de lixiviation (essentiellement le pH) et d'autre part la présence du cuivre n'est pas désirable ; de toutes les façons le cuivre doit être inférieur à 0,5 g/l, de préférence inférieur à 0,1 g/l.

Cependant, d'autres catalyseurs, tels que les ions ammonium et chrome, peuvent être utilisés, mais ces derniers sont de mauvais catalyseurs.

L'homme de métier peut choisir entre deux possibilités, d'une part, maintenir le plomb lixivié en solution ou, d'autre part, le laisser précipiter avec le résidu. Dans le premier cas, il convient d'ajouter des ions chlorure complexants, c'est-à-dire des ions chlorure introduits sous forme de chlorure d'ammonium, de chlorure alcalin ou alcalino-terreux. La concentration des ions chlorure complexants doit être supérieure à 2 équivalent-grammes par litre, de préférence à 4 équivalent-grammes par litre.

Il est également possible d'ajouter en tant qu'agent complexant du chlorure ferreux en excès par rapport à la quantité stœchiométrique définie par l'équation (1). Dans ce cas, le chlorure ferreux se comporte d'une part en tant qu'agent complexant par ses ions chlorure et d'autre part en tant qu'agent améliorant la sélectivité et la cinétique par ses ions fer.

Dans le deuxième cas, pour obtenir une faible solubilité du chlorure de plomb, l'addition d'ions chlorure complexants doit être très faible et ne pas dépasser 1 à 1,5 équivalent-gramme par litre.

Si la quantité de plomb présente dans la pulpe est supérieure à la quantité de plomb susceptible d'être dissoute par la phase aqueuse, le chlorure de plomb formé ultérieurement par la lixiviation précipite alors sous forme de chlorure plombeux. Ce chlorure peut être alors récupéré et séparé de la goethite et du concentré de sulfure de zinc ainsi formé par toutes les techniques physiques reconnues de l'homme de l'art, telles que par exemple la flottation, l'élutriation, le classement densimétrique et le cyclonage.

On peut également soumettre l'ensemble du résidu à l'action de solutions de chlorures d'ammonium, alcalino-terreux et/ou alcalin et leurs mélanges de manière à dissoudre le chlorure plombeux de préférence à chaud. On peut récupérer le plomb du chlorure plombeux par action du fer métallique sous forme de poudre ou de tournures, ce qui permet, d'une part, d'obtenir un cément de plomb de valeur commerciale satisfaisante et, d'autre part, de régénérer le chlorure ferreux nécessaire à la présente lixiviation.

Pour mettre en œuvre la présente invention, une des techniques les plus satisfaisantes si l'on dispose de chlorure ferrique directement ou indirectement consiste à réaliser la production du chlorure ferreux in situ en mettant en contact le composé contenant le sulfure de plomb, ou galène, dans un premier temps avec une solution de chlorure ferrique, l'introduction du chlorure ferrique dans le mélange réactionnel étant régulée de manière que le potentiel redox ne dépasse pas 650, avantageusement 550 et de préférence 450 millivolts par rapport à l'électrode à l'hydrogène. L'introduction dans le mélange réactionnel peut être réalisée soit directement en ajoutant une solution concentrée de chlorure ferrique à une cinétique adéquate, soit indirectement par addition lente d'acide chlorydrique à un milieu réactionnel contenant outre le minerai ou le concentré contenant la galène, un compoxé oxydé de fer III tels que un de ceux du groupe constitué par les oxydes solubles, les hydroxydes, les hydroxy-oxydes, et les carbonates.

Il est nécessaire que la quantité de fer ferrique introduite comme décrit précédemment soit inférieure à 0,7 fois la quantité stœchiométriquement nécessaire pour dissoudre tout le plomb présent dans le minerai ou dans le concentré par la réaction suivante :

$$3\ FeCl_3 + PbS \Rightarrow S^o + 2\ FeCl_2 + PbCl_2$$

Toutefois, il est préférable que la quantité de fer ferrique introduite ne dépasse pas 30 à 40 pour cent de la quantité stœchiométrique définie ci-dessus. La synthèse de chlorure ferreux in situ peut être soit

réalisée en fin de lixiviation et être utilisée pour une lixiviation ultérieure, soit être réalisée avant la lixiviation par le chlorure ferreux plus l'air proprement dite.

Les exemples qui suivent et qui ne présentent aucun caractère limitatif ont pour but de mettre les spécialistes à même de déterminer aisément certaines conditions opératoires qu'il convient d'utiliser dans chaque cas particulier.

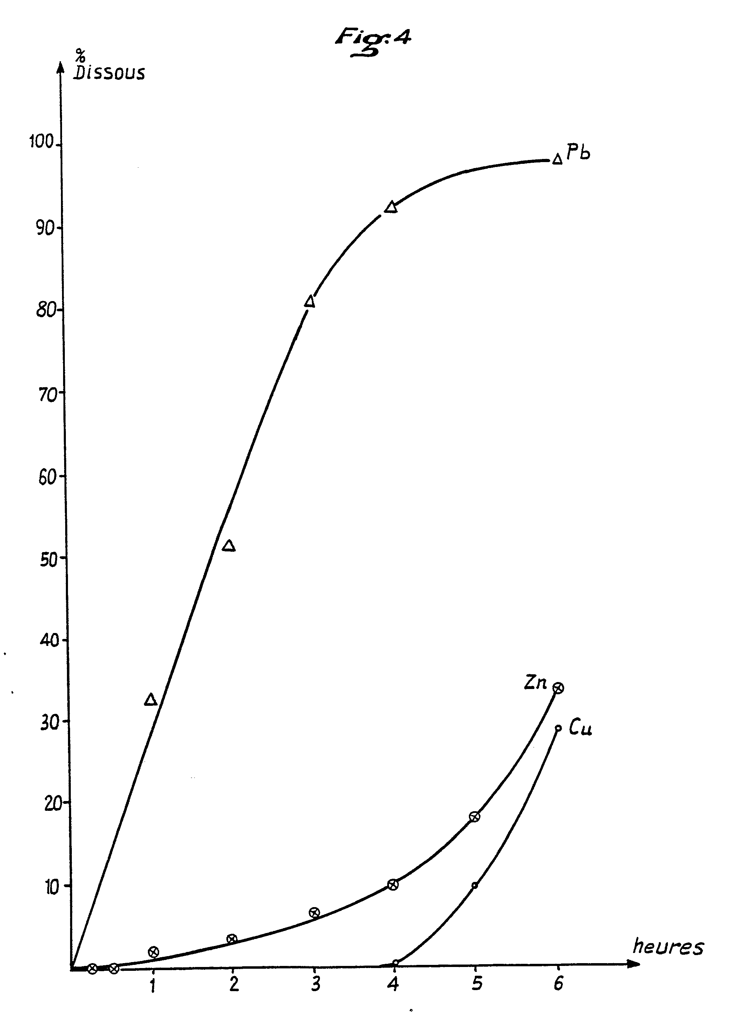

Les figures 1 à 4 permettent une meilleure compréhension à l'homme de l'art des résultats obtenus dans les différents exemples suivants. Ces figures sont en réalité des diagrammes dans lesquels les points correspondant à chaque mesure ont été reliés par les lignes les plus probables. L'homme de l'art pourra aisément lire à l'aide des échelles des ordonnées et des abscisses la valeur correspondante.

La figure 1 correspond à l'exemple 1.

La figure 2 correspond à l'exemple 2. Elle montre l'influence du potentiel sur la dissolution du plomb et du zinc.

Les figures 3 et 4 correspondent à l'exemple 3.

Exemple 1 : Etablissement de courbes de sélectivité de l'attaque du plomb et de l'argent par rapport au zinc

Un concentré impur de galène dont la composition est la suivante :

| | |
|---|---|
| Plomb : 65% | Soufre : 19,6% |
| Zinc : 4% | Fer : 7,5% |
| Argent : 0,13% | Gangue : QSP 100% |

Granulométrie $d_{80}$ = 150 micromètres

est soumis à une température de 90 °C à l'action d'une solution de composition suivante :

NaCl = 250 g/litre
$Fe^{2+}$ = 10 g/litre (sous forme de $FeCl_2$)
$Fe^{3+}$ = selon la quantité étudiée

Le concentré est mélangé à la solution à raison de 30 grammes par litre de solution. La cinétique pour chaque valeur choisie et étudiée de fer ferrique est mesurée à l'aide de prélèvements d'aliquots au bout de 1 ; 2,5 ; 8 ; 16 ; 32 ; 60 et 120 minutes. Les valeurs indiquées sur les courbes ci-après sont des valeurs obtenues au bout de deux heures (120 minutes), à un moment où la solution peut être considérée comme étant à l'équilibre depuis longtemps. La courbe ci-après indique la sélectivité obtenue dans la dissolution du plomb et de l'argent par rapport au zinc en fonction de la quantité de fer ferrique mis en contact avec le concentré, ladite quantité étant exprimée en fonction de la quantité stœchiométrique.

Exemple 2 : Influence du potentiel redox sur la sélectivité de la dissolution

La composition du minerai sulfuré utilisé est :

| | |
|---|---|
| Pb : 1,0 % | S : 52,8 % |
| Zn : 2,86 % | Fe : 41,1 % |
| Cu : 0,95 % | Gangue : QSP 100 % |

$d_{80}$ = 180 micromètres

Un litre d'une solution contenant :

$Fe^{2+}$ : 10 g/l
NaCl : 250 g/l
$Fe^{3+}$ : selon le potentiel désiré
pH : 1,6
température : 66 °C
Taux de pulpe : 300 g/l
durée de la dissolution : une heure

est utilisée pour la dissolution, le potentiel étant maintenu constant par addition de solution de chlorure ferrique, les éléments présents en solution étant déterminés par fluorescence X. Le potentiel est mesuré par rapport à une électrode de référence Ag/AgCl dont le potentiel standard est + 220 mV par rapport à une électrode à hydrogène. Les résultats sont résumés dans la courbe suivante.

On peut noter que la sélectivité est très bonne en tenant compte du fait que la teneur en zinc du minerai est trois fois celle du plomb. Ceci met en évidence le fait qu'il est possible de produire « in situ » un chlorure ferreux en additionnant du chlorure ferrique très lentement et en contrôlant le potentiel redox.

Exemple 3 : Lixiviation selon la présente invention par barbotage d'oxygène pur dans une solution de chlorure ferreux

La composition du minerai sulfuré utilisé est :

| | |
|---|---|
| Pb : 8,5 % | S : 48 % |
| Zn : 7,7 % | Fe : 25,6 % |
| Cu : 12 % | Gangue : QSP 100 % |

Granulométrie : $d_{80}$ = 40 micromètres.

Conditions de lixiviation :
$Fe^{2+}$ : 0,36 M
$CaCl_2$ : 4 M
pH : 2,0
température : 80 °C
Taux de pulpe : 150 g/l
Débit d'oxygène : 10 l/heure.

Les éléments sont déterminés par absorption atomique et les résultats sont donnés dans les courbes suivantes. La figure b montre qu'après 3 heures plus de 90 % du plomb est dissous alors que moins de 10 % du zinc est dissous. On peut souligner que le cuivre n'est pas du tout dissous à de tels potentiels redox. Le potentiel redox est mesuré par rapport à une électrode Ag/AgCl.

Exemple 4 : Attaque d'un minerai dans des conditions très réductrices

La composition du minerai sulfuré utilisé est :

| | |
|---|---|
| Pb : 23,4 % | Cu : 2,74 % |
| Zn : 24,1 % | Fe : 21,0 % |

Conditions de lixiviation :
Solution initiale (1 litre) :
$Fe^{2+}$ : 42 g ; $Fe^{3+}$ : 0
NaCl : 250 g/l
température : 70 °C
Taux de pulpe : 150 g/l
Débit d'oxygène : 0,2 l/heure.

Cinétiques observées :

| Heures | pH | E mV/Ag.AgCl | Pb g/l | Zn g/l | Cu g/l |
|---|---|---|---|---|---|
| 0 | 2,2 | 0 | < 0,05 | < 0,05 | < 0,05 |
| 1 | 2,81 | 44 | 0,96 | " | " |
| 2 | 2,70 | 44 | 1,54 | " | " |
| 3 | 2,64 | 44 | 2,14 | " | " |
| 4 | 2,57 | 64 | 2,63 | " | " |
| 5 | 2,41 | 84 | 4,58 | " | " |
| 6 | 2,37 | 85 | 5,20 | " | " |
| 7 | 2,33 | 83 | 5,89 | " | " |

Cet exemple illustre la très haute sélectivité du procédé dans des conditions extrêmes, à faible débit d'oxygène, où le plomb se dissout lentement.

Exemple 5 : Lixiviation d'une matte plomb-cuivre par le couple $FeCl_2 + O_2$

La composition de la matte est :

Pb : 51,4 %
Cu : 11,0 %
S : 12 %

Granulométrie : broyé et tamisé à 200 micromètres.

Conditions de lixiviation :
Solution initiale (1 litre) :
$Fe^{2+}$ : 0,36 M
$CaCl_2$ : 4 M
pH : 2
température : 85 °C
Taux de pulpe : 70 g/l
Débit d'oxygène : 10 l/heure.
Résultats :

Lors de l'introduction de la matte, on observe une élévation du pH instantanée jusqu'à pH = 4. On laisse l'attaque se poursuivre pendant 8 heures ; le pH est alors redescendu à la valeur pH = 2,5. On sépare ensuite le résidu par filtration. Après lavage à chaud par une solution de chlorure de sodium puis par de l'eau, le résidu séché obtenu pèse 47 g et contient 3 % de plomb pour 15,6 % de cuivre. Le taux de dissolution est donc de 96 % pour le plomb et de moins de 5 % pour le cuivre. En fait, le taux de dissolution du cuivre est obtenu plus précisément par le dosage dans le filtrat final par absorption atomique, qui indique 14 mg/l seulement de cuivre. On peut donc affirmer que le cuivre est pratiquement insoluble alors qu'on dissout le plomb quantitativement.

Il faut souligner que la sélectivité du procédé vis-à-vis du cuivre est très élevée et qu'ainsi il est possible de lixivier sélectivement le plomb à partir de concentrés contenant du cuivre et du plomb. C'est la raison pour laquelle un procédé de lixiviation sélective du plomb vis-à-vis du cuivre doit être considéré comme partie du procédé présentement revendiqué bien que les phénomènes impliqués dans cette sélectivité soient très différents de ceux relatifs à la sélectivité vis-à-vis du zinc et bien qu'un tel procédé soit moins intéressant car il est en compétition avec le procédé décrit dans le brevet français publié sous le n° 2 359 221.

**Revendications**

1. Procédé pour la dissolution sélective du plomb vis-à-vis du zinc ou vis-à-vis du cuivre et du zinc présents dans un composé sulfuré dans lequel on soumet ledit composé à une lixiviation, caractérisé par le fait que ladite lixiviation est réalisée au moyen d'une solution contenant du chlorure ferreux avec barbotage d'un gaz contenant de l'oxygène, par le fait que le pH de la solution de chlorure ferreux est maintenu à une valeur supérieure à 1,5 et par le fait que la température est fixée à une valeur comprise entre environ 60 et 100 °C.

2. Procédé selon la revendication 1, caractérisé par le fait que la lixiviation est réalisée à une température comprise entre 60° et 80 °C.

3. Procédé selon l'une des revendications 1 et 2 prises séparément, caractérisé par le fait que la solution contenant du chlorure ferreux contient en outre des ions chlorure complexants et que la concentration en ions chlorure complexants est supérieure à 2 équivalent-grammes par litre.

4. Procédé selon les revendications 1 à 3 prises séparément, caractérisé par le fait que le pH est régulé au moyen du débit d'oxygène.

5. Procédé selon les revendications 1 à 4 prises séparément, caractérisé par le fait que la durée de lixiviation est comprise entre 3 et 10 heures.

6. Procédé selon les revendications 1 à 5 prises séparément, caractérisé par le fait que le $d_{80}$ du produit à lixivier est supérieur à 50 micromètres.

7. Procédé selon les revendications 1 et 2 et 4 à 6 prises séparément, caractérisé par le fait que la quantité de plomb présent dans la pulpe est supérieure à la quantité de plomb susceptible d'être dissoute par la phase aqueuse, le chlorure de plomb formé par la lixiviation précipitant sous forme de chlorure plombeux.

8. Procédé selon la revendication 7, caractérisé par le fait que le lixiviat est séparé du solide et que le solide est soumis à l'action à chaud d'une solution de chlorure complexant choisi dans le groupe constitué par le chlorure d'ammonium et par les chlorures alcalino-terreux et alcalins.

9. Procédé selon les revendications 1 à 7 prises séparément, caractérisé par le fait que la goethite formée est séparée du concentré de zinc, de nickel et de plomb par flottation.

## Claims

1. Process for the selective dissolution of lead vis-a-vis zinc, or vis-a-vis copper and zinc, present in a sulphurated compound, in which the said compound is subjected to leeching, characterised by the fact that the said leeching is carried out with the aid of a solution containing ferrous chloride, an oxygen-containing gas being bubbled through the same, by the fact that the pH of the solution of ferrous chloride is maintained at a value greater than 1.5 and by the fact that the temperature is maintained at a value of between approximately 60 and 100 °C.

2. Process according to claim 1, characterised by the fact that leeching is carried out at a temperature of between 60° and 80 °C.

3. Process according to one of claims 1 and 2, taken separately, characterised by the fact that the solution containing ferrous chloride contains in addition chelating chloride ions and that the concentration of chelating chloride ions is greater than 2 gram-equivalents per litre.

4. Process according to claims 1 to 3, taken separately, characterised by the fact that the pH is regulated by means of the flow of oxygen.

5. Process according to claims 1 to 4, taken separately, characterised by the fact that the duration of the leeching is between 3 and 10 hours.

6. Process according to claims 1 to 5, taken separately, characterised by the fact that the $d_{80}$ of the product to be leeched is greater than 50 micrometres.

7. Process according to claims 1 and 2 and 4 to 6, taken separately, characterised by the fact that the quantity of lead present in the pulp is greater than the quantity of lead capable of being dissolved by the aqueous phase, the lead chloride formed by leeching precipitating in the form of lead(II) chloride.

8. Process according to claim 7, characterised by the fact that the leeching solution is separated from the solids and that the solids are subjected to the heat action of a chelating chloride solution selected from a group made up of ammonium chloride and the alkaline-earth and alkali metal chlorides.

9. Process according to claims 1 to 7, taken separately, characterised by the fact that the goethite formed is separated from the zinc, nickel and lead concentrate by flotation.

## Patentansprüche

1. Verfahren zur selektiven Auflösung von Blei gegenüber Zink oder gegenüber Kupfer und Zink, die in einer schwefelhaltigen Verbindung vorliegen, bei dem man die Verbindung einer Auslaugung unterwirft, dadurch gekennzeichnet, daß die Auslaugung mittels einer Eisen(II)-chlorid enthaltenden Lösung mit Einblasen eines Sauerstoff enthaltenden Gases durchgeführt wird, daß der pH-Wert der Eisen(II)-chloridlösung auf einem Wert über 1,5 gehalten wird und daß die Temperatur auf einem Wert im Bereich von etwa 60 bis 100 °C festgelegt wird.

2. Verfahren nach dem Anspruch 1, dadurch gekennzeichnet, daß die Auslagung bei einer Temperatur im Bereich von 60 bis 80 °C durchgeführt wird.

3. Verfahren nach einem der Ansprüche 1 und 2, getrennt genommen, dadurch gekennzeichnet, daß die Eisen(II)-chlorid enthaltende Lösung außerdem komplexbildende Chloridionen enthält und daß die Konzentration der komplexbildenden Chloridionen über 2 Grammäquivalenten je Liter ist.

4. Verfahren nach den Ansprüchen 1 bis 3, getrennt genommen, dadurch gekennzeichnet, daß der pH-Wert mit Hilfe des Sauerstoffdurchsatzes reguliert wird.

5. Verfahren nach den Ansprüchen 1 bis 4, getrennt genommen, dadurch gekennzeichnet, daß die Auslaugungsdauer im Bereich von 3 bis 10 Stunden ist.

6. Verfahren nach den Ansprüchen 1 bis 5, getrennt genommen, dadurch gekennzeichnet, daß der $d_{80}$-Wert des auszulaugenden Produkts über 50 Mikrometer ist.

7. Verfahren nach den Ansprüchen 1 und 2 und 4 bis 6, getrennt genommen, dadurch gekennzeichnet, daß die in der Pulpe vorhandene Bleimenge größer als die durch die wäßrige Phase auflösbare Bleimenge ist, wobei das durch die Auslaugung gebildete Bleichlorid in Form von Blei(II)-chlorid ausfällt.

8. Verfahren nach dem Anspruch 7, dadurch gekennzeichnet, daß das Ausgelaugte vom Festen getrennt wird und daß das Feste in der Wärme der Wirkung einer Lösung von komplexbildendem Chlorid ausgesetzt wird, das aus der aus Ammoniumchlorid und den Erdalkali- und Alkalichloriden gebildeten Gruppe gewählt wird.

9. Verfahren nach den Ansprüchen 1 bis 7, getrennt genommen, dadurch gekennzeichnet, daß der gebildete Goethit vom Zink-, Nickel- und Bleikonzentrat durch Flotation getrennt wird.

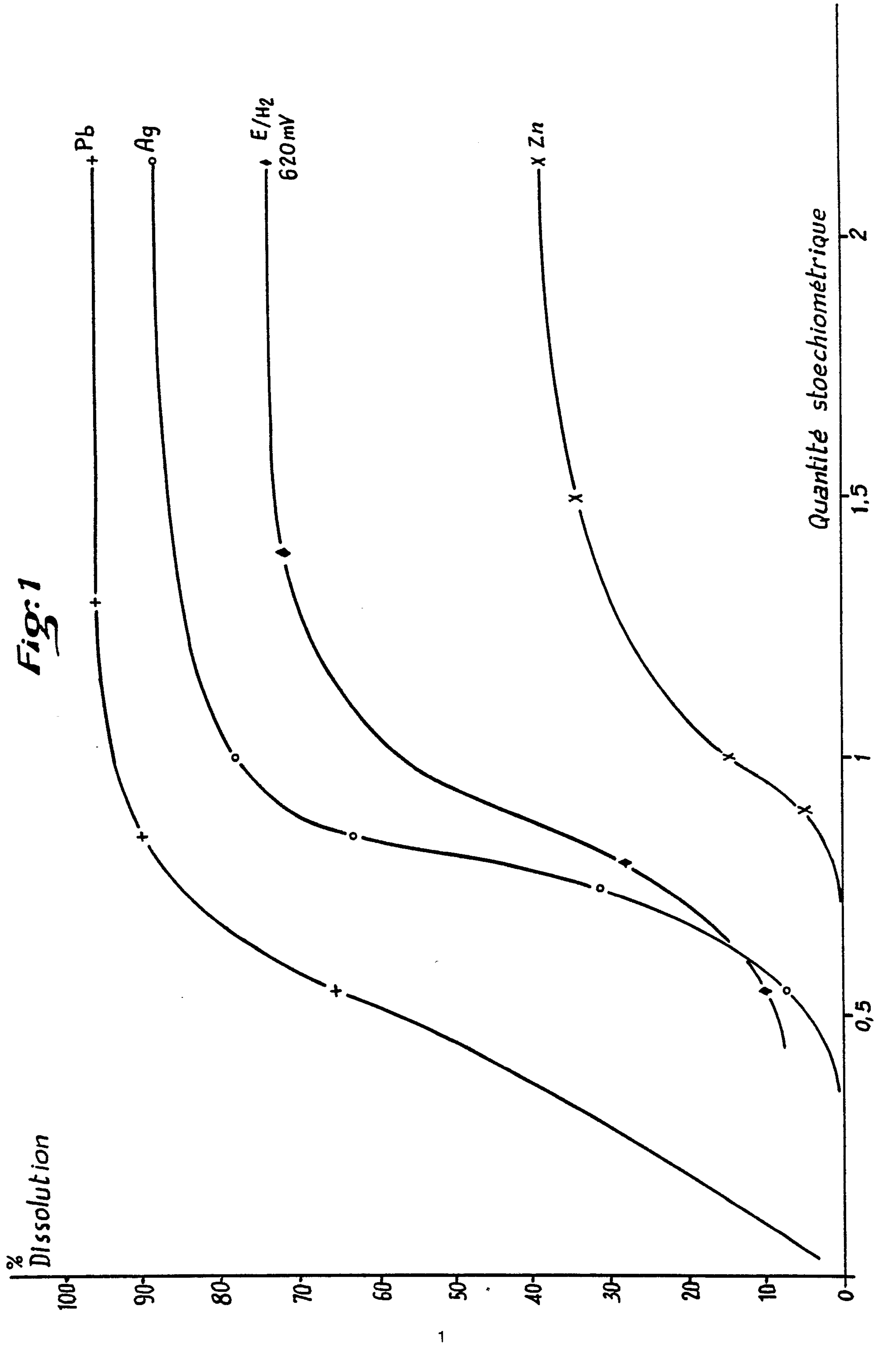

%
Dissolution
100
90
80
70
60
50
40
30
20
10
0
0,5
1
1.5
2
Quantité stoechiométrique
Pb
Ag
E/H2
620mV
Zn


Fig: 1

Fig. 2

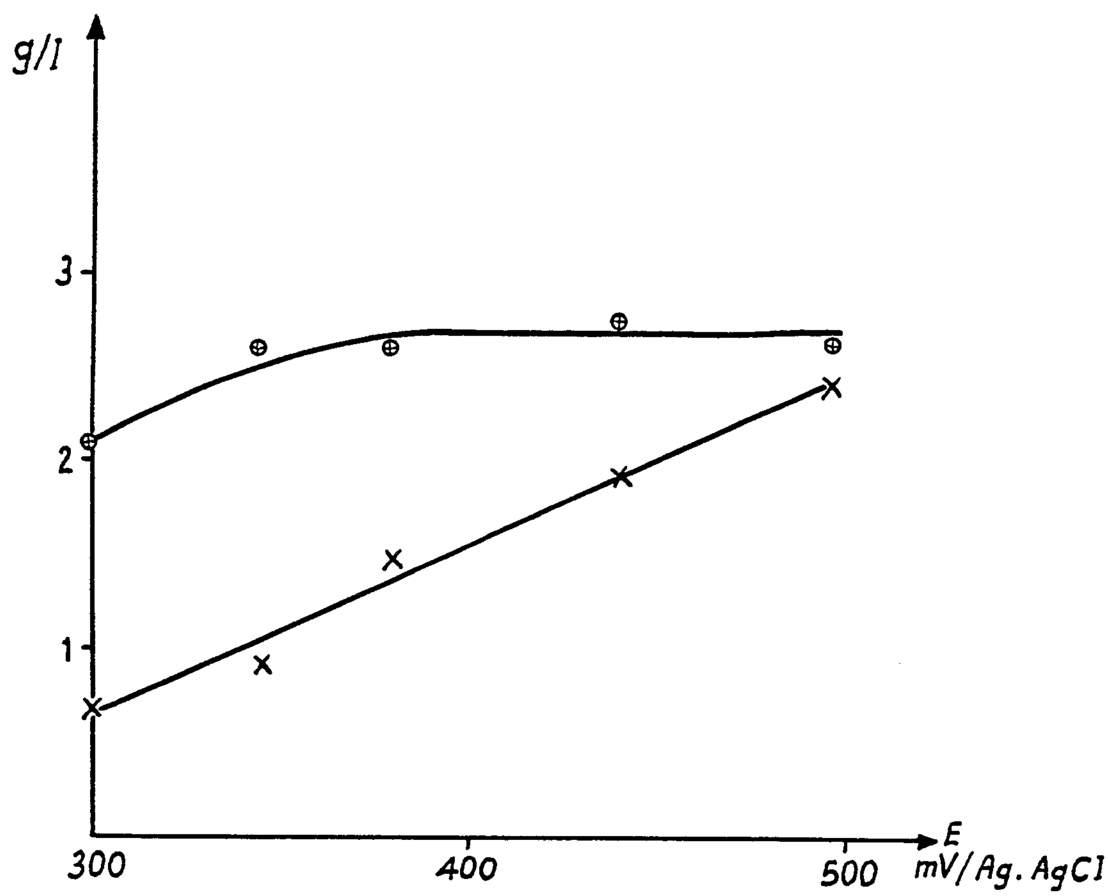

Fig: 3

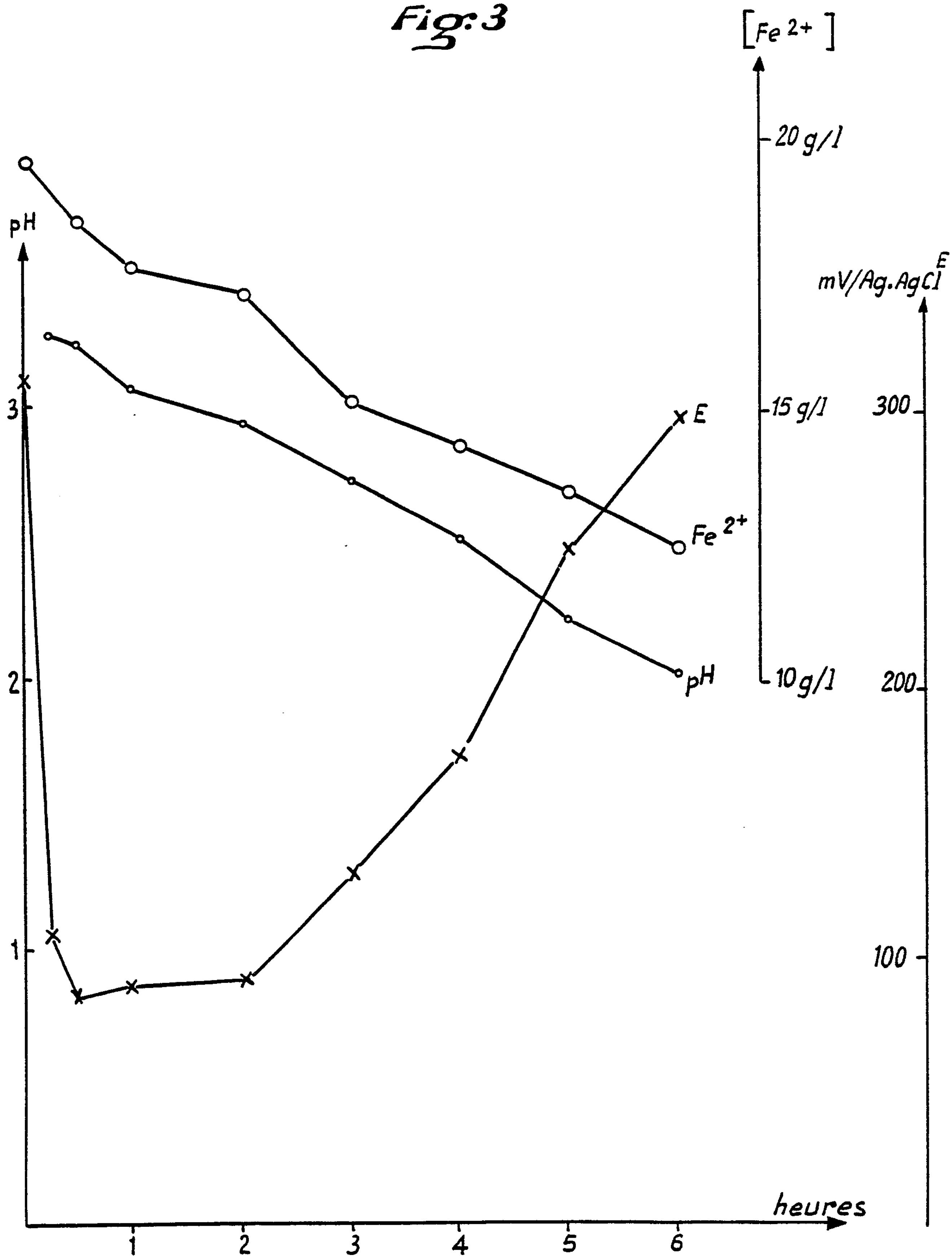

[Fe 2+ ]
20 g/l
15 g/l
10 g/l
pH
3
2
1
mV/Ag.AgCl
E
300
200
100
E
Fe 2+
pH
heures
1
2
3
4
5
6

Fig: 4